(19) Europäisches Patentamt / European Patent Office / Office européen des brevets

(11) **EP 2 700 471 A1**

(12) **EUROPÄISCHE PATENTANMELDUNG**

(43) Veröffentlichungstag:
**26.02.2014 Patentblatt 2014/09**

(51) Int Cl.:
***B23K 26/36*** (2014.01)   ***B23K 26/38*** (2014.01)
***B23P 15/28*** (2006.01)

(21) Anmeldenummer: **13003368.1**

(22) Anmeldetag: **03.07.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **06.07.2012 EP 12005022**

(71) Anmelder: **Rollomatic S.A.**
**2525 Le Landeron (CH)**

(72) Erfinder: **Krumm, Christian**
**CH-2607 Cortébert (CH)**

(74) Vertreter: **Geitz Truckenmüller Lucht**
**Werthmannstrasse 15**
**79098 Freiburg (DE)**

(54) **Verfahren zur Werkstückbearbeitung**

(57)     Es wird ein Verfahren zur Werkstückbearbeitung vorgeschlagen, bei dem ein Laserstrahl und/ oder ein Werkstück relativ zueinander bewegt werden und an dem Werkstück eine Schneidkante mittels Materialabtrag durch Laserablation erzeugt wird. Dabei erfolgt ein erstes Ausrichten des Werkstücks (1) und/ oder des Laserstrahls (2) relativ zueinander. Anschließend erfolgt ein erstes Abtragen von Material von dem Werkstück (1) mit dem Laserstrahl (2). Dabei wird ein erster Bereich (4) des Werkstücks (1) entfernt. Danach wird die Ausrichtung von Werkstück (1) und Laserstrahl (2) relativ zueinander geändert. Die dabei erfolgte zweite Ausrichtung unterscheidet von der ersten Ausrichtung von Werkstück (1) und Laserstrahl (2) relativ zueinander. Bei einem zweiten Abtragen von Material von dem Werkstück (1) wird mit dem Laserstrahl (2', 2", 2''') ein zweiter Bereich (12, 18, 24) des Werkstücks (1) entfernt. Die Schneidkante (16, 23, 29) wird am Ende des zweiten Materialabtrags erzeugt.

Der Laser ist beim ersten und zweiten Abtragen von Material mit seiner Strahlachse unter einem Winkel $\delta < \beta$ gegen diejenige Seitenfläche gerichtett, an der der Matelialabtrag beginnt, wobei $\beta$ der Winkel zwischen der Seitenfläche, an der der Materialabtrag beginnt, und der durch den Materialabtrag erzeugten Seitenfläche ist.

Fig. 1

Fig. 3

**Beschreibung**

Die Erfindung geht aus von einem Verfahren zur Werkstückbearbeitung, bei dem ein Laserstrahl und ein Werkstück relativ zueinander bewegt und eine Schneidkante mittels Materialabtrag erzeugt wird.

Es ist bekannt, Werkstücke mittels kurzer intensiver Laserpulse zu bearbeiten. Die Laserstrahlung mit hoher Leistungsdichte führt zu einer Erhitzung des Materials an der Oberfläche des Werkstücks. In Abhängigkeit von der Leistungsdichte bildet sich an der Oberfläche des Werkstücks ein Plasma aus. Dabei wird an der Oberfläche des Werkstücks Material abgetragen. Dies wird als Laserablation bezeichnet.

Laserstrahl und Werkstück werden definiert relativ zueinander bewegt um Material innerhalb vorgegebener Bereiche des Werkstücks gezielt abzutragen und bestimmte Konturen des Werkstücks auszubilden. Hierzu gehört insbesondere das Erzeugen von Schneiden an Werkstücken. Diese werden auch als Werkzeugschneiden bezeichnet. Es handelt sich hierbei um eine geometrisch bestimmte Schneide zum Trennen von Werkstoffen, insbesondere für spanabhebende Verfahren. Dabei werden von einem Werkstück durch Schneiden eines Werkzeugs Stoffteile in Form von Spänen mechanisch getrennt. Die Form des Schneidkeils und der Kantenradius der Schneidkante wird durch die Schneidengeometrie bestimmt. Der Schneidkeil ist bevorzugt so ausgebildet, dass seine Standfestigkeit möglichst hoch ist und die Spanbildung sowie der Spanabfluß optimiert sind.

Die Schneidkante ist die Kante des Schneidkeils, der durch eine Spanfläche und eine Freifläche gebildet wird. Der Winkel zwischen der Spanfläche und der Freifläche wird als Keilwinkel bezeichnet. Er ist in der Regel kleiner als 120°. Zur Erzeugung eines Schneidkeils an einem Werkstück kann der Laserstrahl auf eine erste Seitenfläche des Werkstücks gerichtet werden, und in einem Bereich der ersten Seitenfläche Material Schicht für Schicht abgetragen werden. Dabei wird eine zweite Seitenfläche des Werkstücks ausgebildet, die zu dem Abschnitt der ersten Seitenfläche, der nicht abgetragen wurde, benachbart ist. Die zweite Seitenfläche ist dabei die Freifläche. Der Abschnitt der ersten Seitenfläche, der nicht abgetragen wurde, ist die Spanfläche. Umgekehrt kann auch die zweite Seitenfläche die Spanfläche und der Abschnitt der ersten Seitenfläche, der nicht abgetragen wurde, die Freifläche sein. Die Spanfläche und die Freifläche begrenzen den Schneidkeil. Der Winkel zwischen der Freifläche und der Spanfläche ist der Keilwinkel. Die Kante, welche durch die Freifläche und die Spanfläche gebildet wird, ist die Schneidkante.

Als nachteilig erweist sich dabei, dass die derart durch Laserablation ausgehend von der ersten Seitenfläche erzeugte Schneidkante einen großen Kantenradius aufweist. Dieser ist unabhängig von der Größe des Keilwinkels. Die Schneidkante weist nicht die notwendige scharfe Struktur auf.

Es ist daher Aufgabe der vorliegenden Erfindung, ein verbessertes Verfahren zur Werkstückbearbeitung zur Verfügung zu stellen, mit dem Schneidkanten mit kleinem Kantenradius und großer Kantenschärfe erzeugt werden können.

Diese Aufgabe wird mit einem Verfahren nach Anspruch 1 gelöst. Hierzu werden das Werkstück und/ oder der Laserstrahl ein erstes Mal ausgerichtet. Dabei wird eine erste Seitenfläche des Werkstücks dem Laserstrahl zugewandt. Anschließend wird Material von dem Werkstück mit dem Laserstrahl abgetragen. Dieses erste Abtragen von Material beginnt bevorzugt in einem ersten Abschnitt der ersten Seitenfläche. Das Material wird Schicht für Schicht abgetragen. Ein erster Bereich des Werkstücks wird Schicht für Schicht vollständig entfernt. Dabei verschwinden bevorzugt der erste Abschnitt der ersten Seitenfläche und das Material darunter vollständig. Durch den Materialabtrag entsteht eine neue zweite Seitenfläche, welche zu einem nach dem Materialabtrag verbleibenden zweiten Abschnitt der ersten Seitenfläche benachbart sein kann. In diesem Fall bilden die zweite Seitenfläche und der zweite Abschnitt der ersten Seitenfläche eine gemeinsame Kante aus. Die zweite Seitenfläche schließt mit dem zweiten Abschnitt der ersten Seitenfläche einen Winkel β ein.

Nach dem ersten Materialabtrag wird die Ausrichtung von Werkstück und Laserstrahl relativ zueinander geändert. Es findet ein zweites Ausrichten des Werkstücks und/ oder des Laserstrahls relativ zueinander statt. Dabei unterscheidet sich die Stellung von Werkstück und Laserstrahl relativ zueinander nach dem zweiten Ausrichten von der Stellung nach dem ersten Ausrichten. Hierzu kann entweder die Ausrichtung des Werkstücks oder die Ausrichtung des Laserstrahls oder beides geändert werden. Werkstück und Laserstrahl werden so zueinander ausgerichtet, dass die erste Seitenfläche oder die zweite Seitenfläche des Werkstücks dem Laserstrahl zugewandt wird. Anschließend findet ein zweites Abtragen von Material von dem Werkstück mit dem Laserstrahl statt. In bevorzugter Weise beginnt das Abtragen entweder in einem ersten Abschnitt der zweiten Seitenfläche und erstreckt sich bis zu dem zweiten Abschnitt der ersten Seitenfläche oder es beginnt in dem zweiten Abschnitt der ersten Seitenfläche und erstreckt sich bis zu einem ersten Abschnitt der zweiten Seitenfläche. Ein zweiter Bereich des Werkstücks wird entfernt. Dabei verschwindet der erste Abschnitt der zweiten Seitenfläche, ein Teil des zweiten Abschnitts der ersten Seitenfläche und das Material darunter. Von dem zweiten Abschnitt der ersten Seitenfläche verbleibt nach dem zweiten Materialabtrag nur noch ein Rest, der als dritter Abschnitt bezeichnet wird. Von der zweiten Seitenfläche verbleibt nach dem zweiten Materialabtrag nur noch ein Rest, der als zweiter Abschnitt der zweiten Seitenfläche bezeichnet wird.

Bei dem zweiten Materialabtrag wird eine neue dritte Seitenfläche erzeugt, welche zu einem dritten nach dem zweiten Materialabtrag an der ersten Seitenfläche verbleibenden Abschnitt benachbart sein kann und zu dem zweiten Abschnitt der zweiten Seitenfläche benachbart sein kann.

Beim ersten und zweiten Abtragen von Material wird der Laserstrahl mit seiner Strahlachse unter einem Winkel $\delta < \beta$ gegen diejenige Seitenfläche gerichtet, an der der jeweilige Materialabtrag beginnt. Dabei ist $\beta$ der Winkel zwischen der Seitenfläche, an der der Materialabtrag beginnt, und der durch den Materialabtrag erzeugten Seitenfläche. Der Laserstrahl weist eine zentrale Strahlachse und einen Strahlöffnungswinkel auf. Die Einstellung des Laserstrahls relativ zu der Seitenfläche des Werkstücks erfolgt im Bezug auf seine zentrale Strahlachse. Dadurch, dass der Laserstrahl mit der Seitenfläche, an der der Materialabtrag beginnt, den Winkel $\delta < \beta$ einschließt, wird das schichtweise Abtragen von Material und die Erzeugung einer neuen Seitenfläche begünstigt, die mit der Seitenfläche, an der der Materialabtrag beginnt, den Winkel $\beta$ einschließt. Der Bereich, der beim Materialabtrag entfernt wird, wird nicht abgeschnitten sondern schichtweise abgetragen.

Der Winkel $\delta$ wird bei dem ersten und zweiten Materialabtrag an der Seitenfläche gemessen, an der der Materialabtrag beginnt. Er wird ausgehend von dem Abschnitt der Seitenfläche gemessen, an dem das Material abgetragen wird.

Da die Strahlachse des Laserstrahls beim Abtragen von Material gegen die zu erzeugende Seitenfläche geneigt ist, kann diese mit größerer Genauigkeit hergestellt werden als wenn der Winkel $\delta$ dem Winkel $\beta$ entspricht. Dies gilt insbesondere deshalb, weil die neue Seitenfläche nicht durch Abschneiden eines Teils des Werkstücks erzeugt wird sondern dadurch, dass ein Abschnitt des Werkstücks komplett Schicht für Schicht abgetragen wird.

Beim schichtweisen Materialabtrag wird der Laserstrahl relativ zur Oberfläche des Werkstücks bewegt, so dass ein Abschnitt des Werkstücks vollständig durch Laserablation entfernt wird. Der Winkel $\delta$ bleibt dabei im wesentlichen erhalten bis der gesamte Abschnitt entfernt ist.

Die Kante, die am Ende des zweiten Materialabtrags an der dritten Seitenfläche ausgebildet wird, ist die Schneidkante. Beginnt der zweite Materialabtrag an der zweiten Seitenfläche und endet an der ersten Seitenfläche, so ist die Schneidkante die Kante zwischen der dritten Seitenfläche und der ersten Seitenfläche, genau genommen die Kante zwischen der dritten Seitenfläche und dem dritten Abschnitt der ersten Seitenfläche. Beginnt der zweite Materialabtrag an der ersten Seitenfläche, so ist die Schneidkante die Kante zwischen der dritten Seitenfläche und der zweiten Seitenfläche, genau genommen zwischen der dritten Seitenfläche und dem zweiten Abschnitt der zweiten Seitenfläche. Die beiden zu der Schneidkante benachbarten Seitenflächen begrenzen den Keilwinkel. Eine der beiden Seitenflächen ist die Spanfläche, die andere ist die Freifläche.

Vorteilhafterweise wird das Werkstück zur Bearbeitung gemäß dem Verfahren auf einem Werkstückträger angeordnet.

Bei dem erfindungsgemäßen Verfahren wird zunächst das Werkstück mit dem Laserstrahl ausgehend von einer ersten Seitenfläche des Werkstücks bearbeitet. Geht man davon aus, dass die erste Seitenfläche des Werkstücks die Vorderseite ist, so findet der erste Materialabtrag von vorne statt. Dabei wird eine neue zweite Seitenfläche erzeugt, welche mit dem verbleibenden Rest der ersten Seitenfläche einen Winkel $\beta$ einschließt. Anschließend wird die Ausrichtung von Werkstück und/ oder Laserstrahl relativ zueinander derartig geändert, dass eine Bearbeitung des Werkstücks von hinten oder von der Seite stattfinden kann. Die Bearbeitung beginnt an der neuen zweiten Seitenfläche und endet an der ersten Seitenfläche oder umgekehrt. Dabei wird eine neue dritte Seitenfläche erzeugt. Die Schneidkante wird aufgrund der Bearbeitung von hinten oder von der Seite nicht zu Beginn des zweiten Materialabtrags sondern am Ende des zweiten Materialabtrags erzeugt. Sie weist daher einen wesentlich kleineren Kantenradius auf als bei bekannten Verfahren, bei denen die Schneidkante von vorne zu Beginn eines Materialabtrags erzeugt wird.

Da die Schneidkante erst am Ende des zweiten Materialabtrags ausgebildet wird, können sich Ungenauigkeiten bei der Positionierung des Laserstrahls auf der zweiten Seitenfläche zu Beginn des zweiten Materialabtrags, Abweichungen des Winkels, unter dem der Laserstrahl auf die zweite oder erste Seitenfläche und das darunter liegende Material gerichtet wird und Besonderheiten der Strahlgeometrie auf die Position der Schneidkante an dritten Seitenfläche auswirken. Dieser Effekt kann dadurch minimiert werden, dass beim zweiten Materialabtrag weniger Material abgetragen wird als beim ersten Materialabtrag.

Durch die Reihenfolge der Bearbeitung und die Erzeugung einer zweiten Seitenfläche von vorne und anschließend einer dritten Seitenfläche von hinten wird nicht nur eine sehr scharfe Schneidkante erzeugt. Es wird außerdem erreicht, dass die Schneidkante an einer exakt vorgegebenen Position erzeugt wird. Die gilt insbesondere bei einer Länge der dritten Seitenfläche, die senkrecht zu der zu erzeugenden Schneidkante klein ist gegenüber der Länge der zweiten Seitenfläche senkrecht zu der Kante zwischen der zweiten Seitenfläche und dem zweiten Abschnitt der ersten Seitenfläche. Diese Länge der dritten Seitenfläche kann kleiner als die Hälfte der Länge der zweiten Seitenfläche, bevorzugt kleiner als ein Viertel und besonders bevorzugt kleiner als ein Achtel der Länge der zweiten Seitenfläche sein. Selbst bei kleinen Abweichungen des Winkels zwischen der dritten Seitenfläche und der zweiten Seitenfläche oder zwischen der dritten Seitenfläche und der ersten Seitenfläche ist die Position der Schneidkante exakt innerhalb vorgegebener Toleranzgrenzen.

Nach einer vorteilhaften Ausgestaltung der Erfindung ist der Winkel $\delta$ kleiner oder gleich der Differenz aus dem Winkel β und dem Winkel 6/ 2. Es gilt $\delta \leq \beta - \theta/2$. Dabei ist β der Winkel zwischen der Seitenfläche, an der der Materialabtrag beginnt, und der durch den Materialabtrag erzeugten Seitenfläche. θ ist der Öffnungswinkel des Laserstrahls. θ ist dabei der gesamte Öffnungswinkel des Strahlkegels des Laserstrahls. θ wird durch die zentrale Strahlachse des Laserstrahls halbiert. Wird der Laserstrahl mit seiner Strahlachse unter einem Winkel $\delta \leq \beta - \theta/2$ gegen die Seitenfläche des Werkstücks eingestellt, an der der Materialabtrag beginnt, so wird bei der Einstellung der Öffnungswinkel des Strahlkegels des Laserstrahls berücksichtigt.

Nach einer weiteren vorteilhaften Ausgestaltung der Erfindung entspricht der Winkel δ im wesentlichen der Differenz aus dem Winkel β und dem halben Öffnungswinkel des Laserstrahls. Es gilt $\delta \approx \beta - \theta/2$. Der Winkel δ kann damit gleich der Differenz aus β und $\theta/2$ sein oder geringfügig kleiner oder geringfügig größer. Der Winkel kann sich in diesem kleinen Umfang auch während des Materialabtrags ändern.

Nach einer vorteilhaften Ausgestaltung der Erfindung ist der Winkel β zwischen der zweiten Seitenfläche und dem zweiten Abschnitt der ersten Seitenfläche größer als 45° und kleiner als 120°.

Nach einer weiteren vorteilhaften Ausgestaltung der Erfindung der Winkel α, $\alpha_1$ oder $\alpha_2$ zwischen der dritten Seitenfläche und dem dritten Abschnitt der ersten Seitenfläche und/ oder der Winkel γ zwischen der dritten Seitenfläche und dem zweiten Abschnitt der zweiten Seitenfläche größer als 0° und kleiner als 180°. Dies gilt insbesondere für den Keilwinkel. Beginnt der zweite Materialabtrag an der zweiten Seitenfläche und endet an der ersten Seitenfläche, so ist der Keilwinkel α. In diesem Fall wird der Keilwinkel α durch die dritte und die erste Seitenfläche begrenzt. Beginnt der zweite Materialabtrag an der ersten Seitenfläche und endet an der zweiten Seitenfläche, so ist der Keilwinkel γ. In diesem Fall wird der Keilwinkel γ durch die dritte Seitenfläche und die zweite Seitenfläche begrenzt.

Nach einer weiteren vorteilhaften Ausgestaltung der Erfindung wird das Material schichtweise durch Laserablation abgetragen. Der von dem Werkstück zur Erzeugung einer neuen Seitenfläche abgetragene Abschnitt wird nicht abgeschnitten sondern vollständig Schicht für Schicht abgetragen. Darüber hinaus kann es auch bereichsweise abgetragen werden, wobei die Bereiche keine Schichten sind.

Nach einer weiteren vorteilhaften Ausgestaltung der Erfindung wird der Laserstrahl mittels einer Strahlführung über das Werkstück bewegt. Die Strahlführung sorgt für einen gezielten Materialabtrag an dem Werkstück. Zusätzlich dazu kann das Werkstück bewegt werden. Hierzu wird der Werkstückträger, an welchem das Werkstück angeordnet ist, mittels eines Antriebs bewegt.

Nach einer weiteren vorteilhaften Ausgestaltung der Erfindung wird das Material bei dem ersten Materialabtrag zur Ausbildung der zweiten Seitenfläche von der ersten Seitenfläche bis zu einer vierten Seitenfläche des Werkstücks abgetragen. Dabei ist die vierte Seitenfläche der ersten Seitenfläche des Werkstücks abgewandt. Das heißt, die erste und die vierte Seitenfläche berühren sich nicht und sind nicht benachbart. Sie weisen keine gemeinsame Kante auf. Die bei dem ersten Materialabtrag erzeugte zweite Seitenfläche reicht von der ersten Seitenfläche bis zu der vierten Seitenfläche. Sie ist zu der ersten und zu der vierten Seitenfläche benachbart. Die zweite Seitenfläche bildet mit der ersten Seitenfläche eine Kante aus. Ferner bildet die zweite Seitenfläche mit der vierten Seitenfläche eine Kante aus. Die beiden Kanten können parallel zueinander sein. Die vierte Seitenfläche kann beispielsweise parallel zu der ersten Seitenfläche sein. In diesem Fall entspricht der Winkel zwischen der vierten und der zweiten Seitenfläche der Differenz aus 180° und β, wobei β der Winkel zwischen der ersten und der zweiten Seitenfläche ist. Die dritte Seitenfläche ist nicht benachbart zu der vierten Seitenfläche. Sie bildet daher mit der vierten Seitenfläche keine gemeinsame Kante aus. Die dritte Seitenfläche ist benachbart zu der ersten Seitenfläche, insbesondere zu dem nach dem ersten und dem zweiten Materialabtrag verbleibenden dritten Abschnitt der ersten Seitenfläche. Ferner ist die dritte Seitenfläche benachbart zu dem nach dem zweiten Materialabtrag verbleibenden zweiten Abschnitt der zweiten Seitenfläche. Dieser zweite Abschnitt der zweiten Seitenfläche ist benachbart zu der vierten Seitenfläche. Der zweite Abschnitt der zweiten Seitenfläche und die vierte Seitenfläche bilden eine gemeinsame Kante aus. Bei dem ersten Materialabtrag wird ein Teil der vierten Seitenfläche abgetragen. Bei dem zweiten Materialabtrag wird kein Material von der vierten Seitenfläche abgetragen.

Nach einer weiteren vorteilhaften Ausgestaltung der Erfindung werden die zweite und die dritte Seitenfläche beim Materialabtrag als ebene Flächen ausgebildet. Darüber hinaus besteht die Möglichkeit, die zweite Seitenfläche beim ersten Materialabtrag als gekrümmte Fläche und/ oder die dritte Seitenfläche beim zweiten Materialabtrag als gekrümmte Fläche auszubilden.

Nach einer weiteren vorteilhaften Ausgestaltung der Erfindung wird das Werkstück nach dem ersten Abtragen von Material und vor dem zweiten Abtragen von Material relativ zum Laserstrahl um einen Winkel zwischen 60° und 180° um eine zur Strahlachse des Laserstrahls im wesentlichen senkrechten Achse gedreht. Dies führt dazu, dass das Werkstück mit der zweiten Seitenfläche oder der ersten Seitenfläche unter einem beim ersten Materialabtrag unterschiedlichem Winkel dem Laserstrahl zugewandt wird. Dadurch wird eine Bearbeitung des Werkstücks von hinten ermöglicht. Bei der Rotation ist zu berücksichtigen, dass der Laserstrahl keine parallele sondern eine leicht konische Form aufweist. Der Laserstrahl weist einen Öffnungswinkel θ auf, der bei der Ausrichtung des Lasers relativ zu der Oberfläche des Werkstück berücksichtigt wird.

Nach einer weiteren vorteilhaften Ausgestaltung der Erfindung wird beim zweiten Materialabtrag weniger Material mit dem Laserstrahl abgetragen als beim ersten Materialabtrag. Dadurch kann die Schneidkante zwischen der ersten und der dritten Seitenfläche exakt positioniert werden. Der zweite Bereich, welcher bei dem zweiten Materialabtrag von dem Werkstück durch Laserablation entfernt wird ist in diesem Fall kleiner als der erste Bereich, welcher beim ersten Materialabtrag von dem Werkstück durch Laserablation entfernt wird.

Weitere Vorteile und vorteilhafte Ausgestaltungen der Erfindung sind der nachfolgenden Beschreibung, der Zeichnung und den Ansprüchen entnehmbar.

Zeichnung

In der Zeichnung sind drei Ausführungsbeispiele der Erfindung dargestellt. Es zeigen:

Figur 1     Werkstück und Laserstrahl eines ersten Ausführungsbeispiels in seiner Seitenansicht vor dem ersten Materialabtrag,

Figur 2     Werkstück gemäß Figur 1 in Seitenansicht nach dem ersten Materialabtrag,

Figur 3     Werkstück und Laserstrahl des ersten Ausführungsbeispiels in Seitenansicht vor dem zweiten Materialabtrag,

Figur 4     Werkstück gemäß Figur 3 in Seitenansicht nach dem zweiten Materialabtrag,

Figur 5     Werkstück gemäß Figur 1 vor dem ersten Materialabtrag in perspektivischer Ansicht mit Markierung der zweiten und dritten Seitenfläche,

Figur 6     Werkstück gemäß Figur 5 in Seitenansicht,

Figur 7     Werkstück gemäß Figur 4 nach dem zweiten Materialabtrag in perspektivischer Ansicht,

Figur 8     Werkstück und Laserstrahl eines zweiten Ausführungsbeispiels in seiner Seitenansicht nach dem ersten Materialabtrag und vor dem zweiten Materialabtrag,

Figur 8a     Ausschnitt aus Figur 8,

Figur 9     Werkstück und Laserstrahl eines dritten Ausführungsbeispiels in seiner Seitenansicht nach dem ersten Materialabtrag und vor dem zweiten Materialabtrag

Figur 10     Werkstück und Laser mit Strahlachse und Strahlöffnungswinkel.

Beschreibung der Ausführungsbeispiele

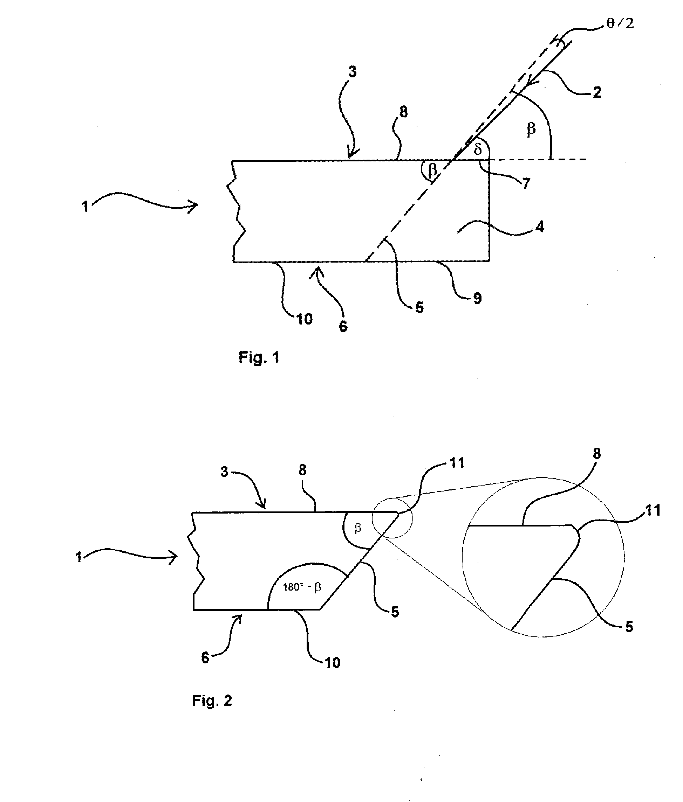

In den Figuren 1 bis 4 sind bei einem ersten Ausführungsbeispiel die verschiedenen Schritte des Verfahrens zur Werkstückbearbeitung dargestellt. Figur 1 zeigt ein Werkstück 1 in einer Seitenansicht vor dem ersten Materialabtrag. Es handelt sich um einen Rohling. Dabei ist das Werkstück 1 auf einem nicht dargestellten Werkstückträger angeordnet. Ein Laserstrahl 2 wird auf das Werkstück 1 gerichtet. Der Laserstrahl wird von einer Laserquelle erzeugt und mittels einer Strahlführung auf das Werkstück 1 gerichtet und über das Werkstück 1 geführt. Die Laserquelle und die Strahlführung sind in der Zeichnung nicht dargestellt. In Figur 1 ist das Werkstück 1 mit einer ersten Seitenfläche 3 nach oben ausgerichtet. Die Seitenfläche 3 entspricht der Vorderseite des Werkstücks 1. Der Laserstrahl 2 ist mit seiner Strahlachse unter einem Winkel $\delta$ auf das Werkstück 1 gerichtet. Dabei gilt für den Winkel $\delta = \beta - \theta/2$. $\beta$ ist der Winkel zwischen der Seitenfläche 3, an der der Materialabtrag beginnt und der durch den Materialabtrag erzeugten Seitenfläche 5. $\theta$ ist der Strahlöffnungswinkel des Lasers.

Der Winkel $\delta$ wird bei dem ersten und zweiten Materialabtrag an der Seitenfläche gemessen, an der der Materialabtrag beginnt. Er wird ausgehend von dem Abschnitt der Seitenfläche gemessen, an dem das Material abgetragen wird. In Figur 1 ist dies der erste Abschnitt 7 der ersten Seitenfläche 3.

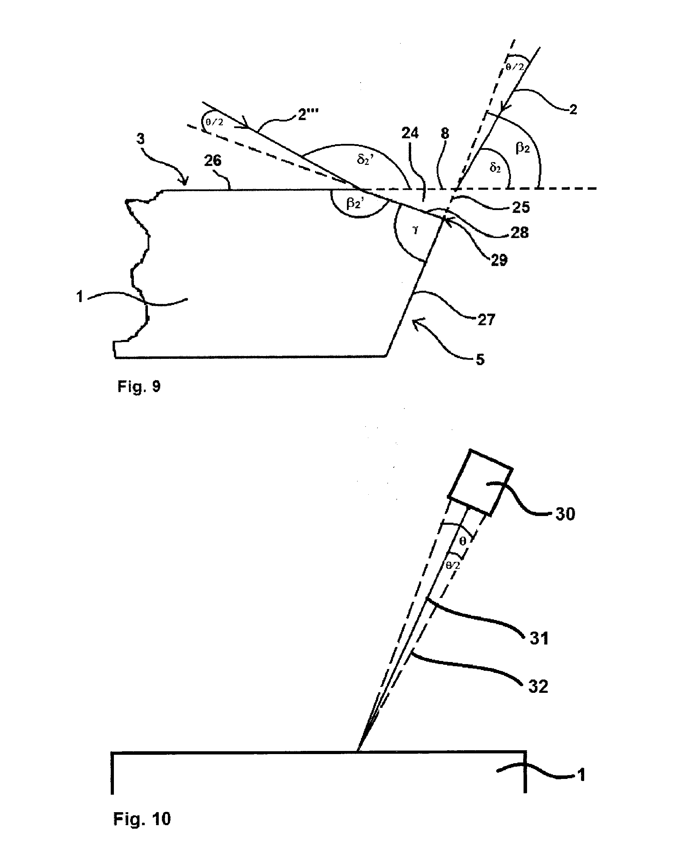

In Figur 10 ist der Laser 30 mit seiner Strahlachse 31 und seinem Öffnungskegel 32 dargestellt. Der Öffnungswinkel des Strahlkegels ist der Strahlöffnungswinkel $\theta$. Die Strahlachse 31 verläuft im Zentrum des Strahlkegels 32. $\theta/2$ ist die Hälfte des Strahlöffnungswinkels. Der Strahlkegel ist ein gerader Kreiskegel. Die Grundfläche ist ein Kreis. Die zentrale Strahlachse ist eine Gerade, die durch den Mittelpunkt der kreisförmigen Grundfläche und durch die Kegelspitze verläuft. $\theta/2$ entspricht dem Winkel zwischen der Erzeugenden des Strahlkegels und der zentralen Strahlachse. Der Strahlkegel wird durch das Laserlicht des Lasers 30 und eine in der Zeichnung nicht dargestellte Linse oder ein Linsensystem erzeugt. Die Linse oder das Linsensystem befinden sich in dem Lasergehäuse. Die Linse oder das Linsensystem fokussiert das Laserlicht auf die Oberfläche des Werkstücks 1. Laser 30 und Werkstück 1 werden vorteilhafterweise so angeordnet, dass sich der Brennpunkt auf der Oberfläche des Werkstücks befindet. Beim Abtragen der Materials des Werkstücks wird der Fokus des Laserstrahls nachgeführt, so dass er sich stets an der gerade zu bearbeitenden Oberfläche befindet.

Mit dem Laserstrahl 2 wird in einem ersten Materialabtrag ein Bereich 4 des Werkstücks 1 entfernt und eine in Figur 1 durch eine gestrichelte Linie angedeutete neue zweite Seitenfläche 5 erzeugt. Hierzu wird der Laserstrahl 2 relativ zu dem Werkstück 1 geführt, um Schicht für Schicht beginnend an der ersten Seitenfläche 3 bis zu einer der ersten Seitenfläche 3 abgewandten vierten Seitenfläche 6 abzutragen. Die vierte Seitenfläche 6 ist parallel zu der ersten Seitenfläche 1. Sie entspricht der Rückseite des Werkstücks 1. Von der ersten Seitenfläche 3 verschwindet nach dem ersten Materialabtrag ein erster Abschnitt 7. Es verbleibt ein zweiter Abschnitt 8 der ersten Seitenfläche 3. Von der vierten Seitenfläche 6 verschwindet nach dem ersten Materialabtrag ein erster Abschnitt 9. Es verbleibt ein zweiter Abschnitt 10 der vierten Seitenfläche.

Figur 2 zeigt das Werkstück 1 nach dem ersten Materialabtrag. Der Bereich 4 des Werkstücks 1 wurde entfernt. Das Werkstück 1 weist die neue zweite Seitenfläche 5 auf. Von der ersten Seitenfläche 3 des Werkstücks ist nach dem ersten Materialabtrag noch der zweite Abschnitt 8 übrig. Von der vierten Seitenfläche 6 ist nach dem ersten Materialabtrag noch der zweite Abschnitt 10 übrig. Die zweite Seitenfläche 5 grenzt an die erste Seitenfläche 3 in deren zweitem Abschnitt 8. Die zweite Seitenfläche 5 und der zweite Abschnitt 8 der ersten Seitenfläche 3 bilden eine gemeinsame Kante 11 aus. Ferner grenzt die zweite Seitenfläche 5 an die vierte Seitenfläche 6 in deren zweitem Abschnitt 10. Die zweite Seitenfläche 5 und der zweite Abschnitt 10 der vierten Seitenfläche bilden eine gemeinsame Kante aus, die parallel zu der Kante 11 ist. Die zweite Seitenfläche 5 ist unmittelbar benachbart zu der ersten Seitenfläche 3 und zu der vierten Seitenfläche 6. Die zweite Seitenfläche 5 und der zweite Abschnitt 8 der ersten Seitenfläche 3 schließen einen Winkel $\beta$ ein, der kleiner als 90° ist. Da die erste Seitenfläche und die vierte Seitenfläche parallel zueinander sind, schließen die zweite Seitenfläche 5 und der zweite Abschnitt 10 der vierten Seitenfläche 6 den Winkel 180° minus $\beta$ ein. Da der erste Materialabtrag mit dem Laser an der ersten Seitenfläche 3 beginnt, weist die Kante 11 zwischen der zweiten Seitenfläche 5 einerseits und dem zweiten Abschnitt 8 der ersten Seitenfläche 3 andererseits einen großen Kantenradius auf. Die Kante 11 ist daher abgerundet und bildet keine scharfe Kantenstruktur aus. Dies ist in einem Ausschnitt aus Figur 2 vergrößert dargestellt.

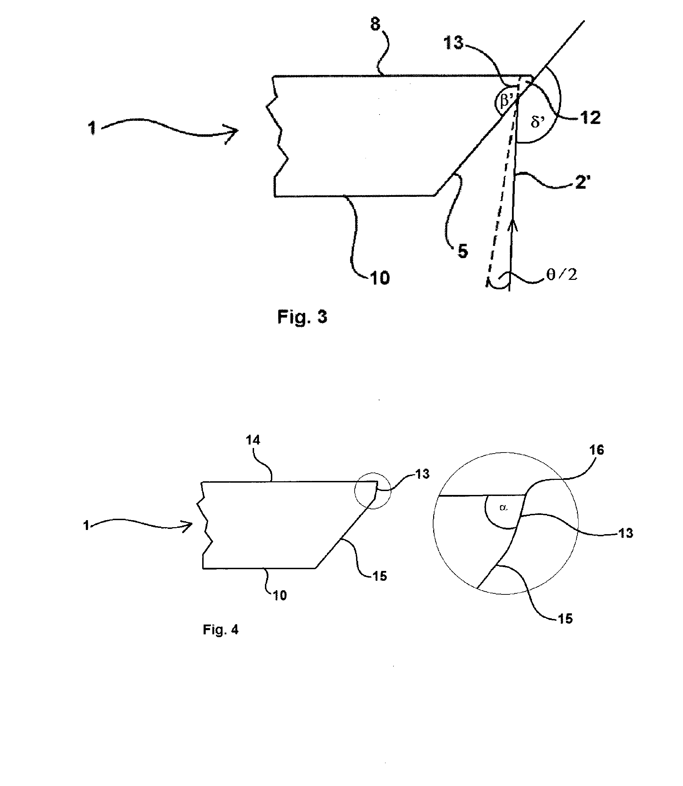

Nach dem ersten Materialabtrag werden die Ausrichtung des Werkstücks 1 und/ oder des Laserstrahls 2 geändert, so dass der Laserstrahl an einer der ersten Seitenfläche 3 abgewandten Seite auf das Werkstück 1 trifft. Wie in Figur 3 dargestellt trifft nach der Änderung der Ausrichtung der Laserstrahl 2' auf die zweite Seitenfläche 5. Der Laserstrahl 2' wird unter einem Winkel

$$\delta' = \beta' - \theta/2$$

gegen die zweite Seitenfläche 5 gerichtet. Dabei ist $\beta'$ der Winkel zwischen der zweiten Seitenfläche 5, an der der zweite Materialabtrag beginnt, und der durch den zweiten Materialabtrag erzeugten dritten Seitenfläche 13. $\theta/2$ entspricht wieder dem halben Strahlöffnungswinkel des Laserstrahls.

Anschließend wird der Laserstrahl über die zweite Seitenfläche geführt um in einem zweiten Materialabtrag Schicht für Schicht einen zweiten Bereich 12 von dem Werkstück 1 zu entfernen. Dabei verschwindet ein erster Abschnitt 19 der zweiten Seitenfläche sowie ein Teil des zweiten Abschnitts 8 der ersten Seitenfläche. Es wird eine dritte Seitenfläche 13 erzeugt, die in Figur 3 gestrichelt angedeutet ist. Der beim zweiten Materialabtrag von dem Werkstück entfernte Bereich 12 ist wesentlich kleiner als der beim ersten Materialabtrag entfernte Bereich 4.

Figur 4 zeigt das Werkstück 1 nach dem zweiten Materialabtrag. Der zweite Materialabtrag beginnt an der zweiten Seitenfläche und endet an der ersten Seitenfläche 3. Nach dem zweiten Materialabtrag verbleibt an dem Werkstück 1 ein dritter Abschnitt 14 der ersten Seitenfläche 3 und ein zweiter Abschnitt 15 der zweiten Seitenfläche 5. Die dritte Seitenfläche 13 ist unter einem Winkel $\alpha$ gegen die erste Seitenfläche 3 geneigt. Dabei ist $\alpha$ kleiner als 90° und größer als $\beta$. Der Schneidkeil wird durch den dritten Abschnitt 14 der ersten Seitenfläche 3 und durch die dritte Seitenfläche 13 gebildet. $\alpha$ entspricht dem Keilwinkel, der dritte Abschnitt 14 der ersten Seitenfläche 3 der Spanfläche und die dritte Seitenfläche 13 der Freifläche. Die dritte Seitenfläche 13 und der dritte Abschnitt der ersten Seitenfläche bilden eine gemeinsame Kante aus. Dies ist die Schneidkante 16. Die Schneidkante 16 des Schneidkeils weist einen wesentlich kleineren Kantenradius auf als die in Figur 2 dargestellte Kante zwischen der ersten Seitenfläche 3 und der zweiten Seitenfläche 5.

Die dritte Seitenfläche 13 und der zweite Abschnitt der zweiten Seitenfläche 15 sind unter zwei verschiedenen Winkeln gegen die erste Seitenfläche geneigt. Der Winkel $\alpha$ zwischen der ersten Seitenfläche 3 und der dritten Seitenfläche 13 ist dabei größer als der Winkel $\beta$ zwischen der ersten Seitenfläche 3 und der zweiten Seitenfläche 5. Der Winkel zwischen den dritten Seitenfläche und dem zweiten Abschnitt 15 der zweiten Seitenfläche 5 beträgt 180° minus $\alpha$ plus $\beta$.

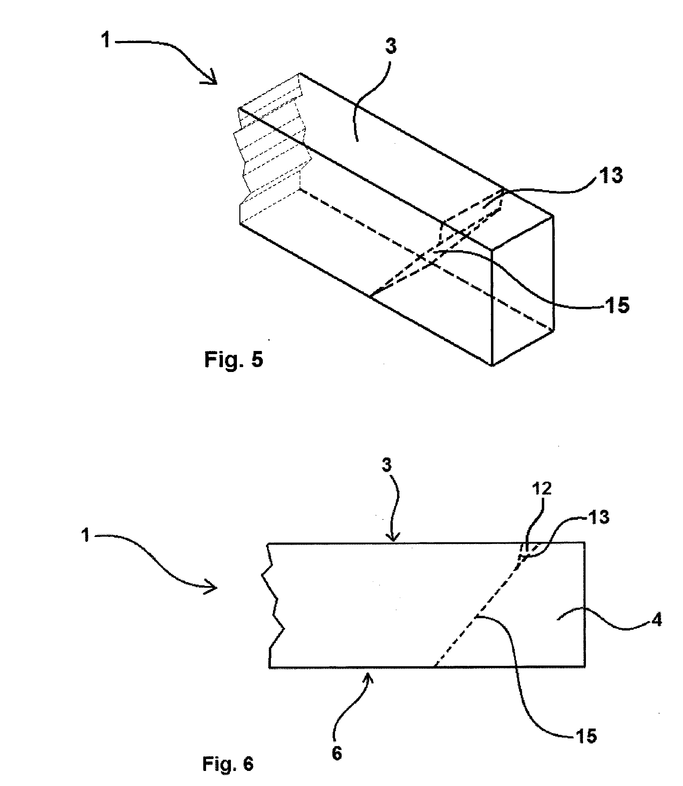

Die Figuren 5 und 6 zeigen das Werkstück 1 vor dem ersten Materialabtrag. Die zweite Seitenfläche 5 und die dritte Seitenfläche 13 sind angedeutet.

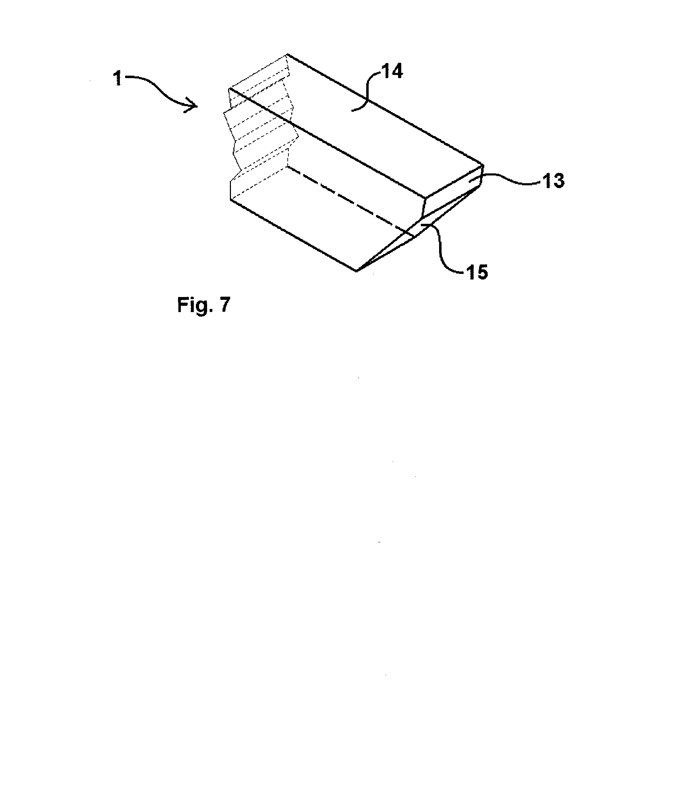

In Figur 7 ist das Werkstück 1 nach dem zweiten Materialabtrag perspektivisch dargestellt.

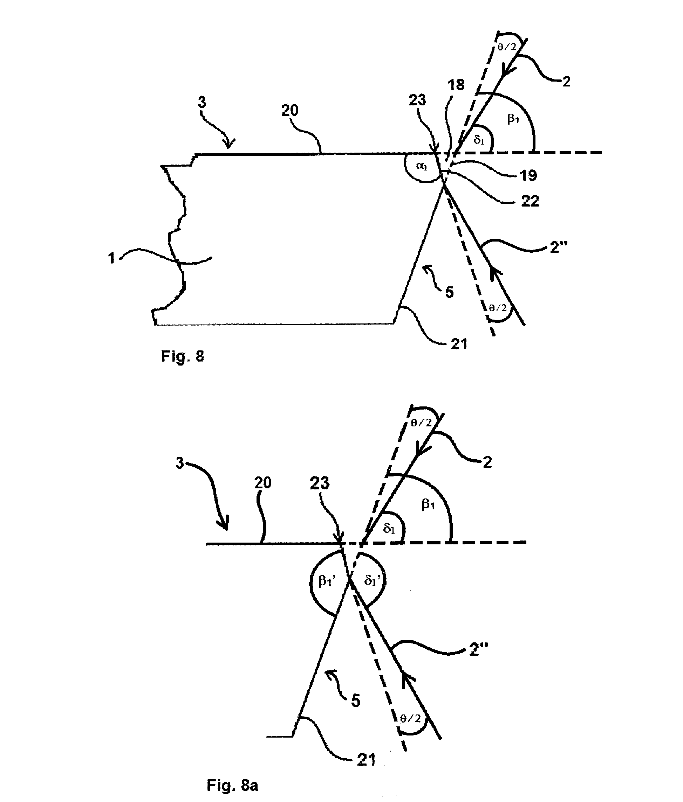

Figur 8 zeigt ein zweites Ausführungsbeispiel des Verfahrens. Hinsichtlich des ersten Materialabtrags stimmt das zweite Aüsführungsbeispiel mit dem ersten Ausführungsbeispiel überein. Die in den Figuren 1 und 2 dargestellten Verfahrensschritte betreffend das erste Ausrichten von Werkstück 1 und Laserstrahl 2 und den ersten Materialabtrag sind daher beim zweiten Ausführungsbeispiel identisch. Die mit dem ersten Ausführungsbeispiel übereinstimmenden Bezugszahlen sind bei dem in Figur 8 dargestellten zweiten Ausführungsbeispiel gleich wie beim ersten Ausführungsbeispiel. Beim ersten Materialabtrag wird der Laserstrahl 2 mit seiner Strahlachse unter dem Winkel $\delta_1 = \beta_1 - \theta/2$ relativ

zur ersten Seitenfläche 3 ausgerichtet. $\beta_1$ ist der Winkel zwischen der Seitenfläche 3, an der der Materialabtrag beginnt und der durch den Materialabtrag erzeugten Seitenfläche 5. $\theta$ ist der Strahlöffnungswinkel des Lasers. Der Unterschied zwischen dem ersten und zweiten Ausführungsbeispiel besteht in der zweiten Ausrichtung von Werkstück 1 und Laserstrahl zueinander. Nach dem zweiten Ausrichten trifft der Laserstrahl 2" unter einem vom ersten Ausführungsbeispiel verschiedenen Winkel $\delta_1' = \beta_1' - \theta/2$ auf die zweite Seitenfläche 5. Der zweite Materialabtrag beginnt bei dem zweiten Ausführungsbeispiel an der zweiten Seitenfläche 5 und endet an der ersten Seitenfläche 3. Bei dem zweiten Materialabtrag wird ein zweiter Bereich 18 von dem Werkstück 1 entfernt. Dabei verschwindet ein Teil des zweiten Abschnitts der ersten Seitenfläche 3 und ein erster Abschnitt 19 der zweiten Seitenfläche 5. Es verbleibt ein dritter Abschnitt 20 der ersten Seitenfläche und ein zweiter Abschnitt 21 der zweiten Seitenfläche 5. Ferner entsteht eine neue dritte Seitenfläche 22, die zu dem dritten Abschnitt 20 der ersten Seitenfläche und zu dem zweiten Abschnitt 21 der zweiten Seitenfläche 5 benachbart ist. Die Kante zwischen der dritten Seitenfläche 22 und dem dritten Abschnitt 20 der ersten Seitenfläche wird am Ende des zweiten Materialabtrags erzeugt. Sie ist die Schneidkante 23. Der Winkel $\alpha_1$ zwischen der ersten Seitenfläche 3 und der dritten Seitenfläche 22 ist größer als 90°.

Figur 8a zeigt einen Ausschnitt aus der Figur 8. In diesem Ausschnitt sind die Winkel $\delta_1'$ und $\beta_1'$ dargestellt.

Figur 9 zeigt ein drittes Ausführungsbeispiel des Verfahrens. Hinsichtlich des ersten Materialabtrags stimmt das dritte Ausführungsbeispiel mit dem ersten und dem zweiten Ausführungsbeispiel überein. Die in den Figuren 1 und 2 dargestellten Verfahrensschritte betreffend das erste Ausrichten von Werkstück 1 und Laserstrahl 2 und den ersten Materialabtrag sind daher beim dritten Ausführungsbeispiel identisch. Die mit dem ersten Ausführungsbeispiel übereinstimmenden Bezugszahlen sind bei dem in Figur 9 dargestellten dritten Ausführungsbeispiel gleich wie beim ersten Ausführungsbeispiel. Beim ersten Materialabtrag wird der Laserstrahl 2 mit seiner Strahlachse unter dem Winkel $\delta_2 = \beta_2 - \theta/2$ relativ zur ersten Seitenfläche 3 ausgerichtet. $\beta_2$ ist der Winkel zwischen der Seitenfläche 3, an der der Materialabtrag beginnt, und der durch den Materialabtrag erzeugten Seitenfläche 5. $\theta$ ist der Strahlöffnungswinkel des Lasers. Der Unterschied zwischen dem ersten und dritten Ausführungsbeispiel besteht in der zweiten Ausrichtung von Werkstück 1 und Laserstrahl zueinander. Nach dem zweiten Ausrichten trifft der Laserstrahl 2''' unter einem Winkel $\delta_2' = \beta_2' - \theta/2$ auf die erste Seitenfläche 3, genau genommen auf den zweiten Abschnitt 8 der ersten Seitenfläche 3. Im Unterschied zu dem ersten und dem zweiten Ausführungsbeispiel wird der Laserstrahl 2''' nach dem zweiten Ausrichten auf die erste Seitenfläche 3 und nicht auf die zweite Seitenfläche 5 gerichtet. Der zweite Materialabtrag beginnt bei dem dritten Ausführungsbeispiel an der ersten Seitenfläche 3 und endet an der zweiten Seitenfläche 5. Bei dem zweiten Materialabtrag wird ein zweiter Bereich 24 von dem Werkstück 1 entfernt. Dabei verschwindet ein Teil des zweiten Abschnitts 8 der ersten Seitenfläche 3 und ein erster Abschnitt 25 der zweiten Seitenfläche 5. Es verbleibt ein dritter Abschnitt 26 der ersten Seitenfläche und ein zweiter Abschnitt 27 der zweiten Seitenfläche 5. Ferner entsteht eine neue dritte Seitenfläche 28, die zu dem dritten Abschnitt 26 der ersten Seitenfläche und zu dem zweiten Abschnitt 27 der zweiten Seitenfläche benachbart ist. Die Kante zwischen der dritten Seitenfläche 28 und dem zweiten Abschnitt 27 der zweiten Seitenfläche 5 wird am Ende des zweiten Materialabtrags erzeugt. Sie ist die Schneidkante 29. Der Schneidkeil wird im Unterschied zu dem ersten und dem zweiten Ausführungsbeispiel durch die dritte Seitenfläche 28 und den zweiten Abschnitt 27 der zweiten Seitenfläche 5 gebildet. Der Winkel zwischen der dritten Seitenfläche 28 und dem zweiten Abschnitt 27 der zweiten Seitenfläche 5 ist der Keilwinkel $\gamma$.

Sämtliche Merkmale der Erfindung können sowohl einzeln als auch in beliebiger Kombination miteinander erfindungswesentlich sein.

Bezugszahlen

| 1 | Werkstück |
| 2 | Laserstrahl beim ersten Materialabtrag |
| 2' | Laserstrahl beim zweiten Materialabtrag des ersten Ausführungsbeispiels |
| 2" | Laserstrahl beim zweiten Materialabtrag des zweiten Ausführungsbeispiels |
| 2''' | Laserstrahl beim zweiten Materialabtrag des dritten Ausführungsbeispiels |
| 3 | erste Seitenfläche des Werkstücks |
| 4 | Bereich des Werkstücks, der bei dem ersten Materialabtrag entfernt wird |
| 5 | zweite Seitenfläche des Werkstücks |
| 6 | vierte Seitenfläche des Werkstücks |
| 7 | erster Abschnitt der ersten Seitenfläche |
| 8 | zweiter Abschnitt der ersten Seitenfläche |
| 9 | erster Abschnitt der vierten Seitenfläche |
| 10 | zweiter Abschnitt der vierten Seitenfläche |

11 Kante zwischen dem zweiten Abschnitt der ersten Seitenfläche und der zweiten Seitenfläche nach dem ersten Materialabtrag

12 zweiter Bereich des Werkstücks, der bei einem zweiten Materialabtrag des ersten Ausführungsbeispiels entfernt wird

13 dritte Seitenfläche des Werkstücks

14 dritter Abschnitt der ersten Seitenfläche

15 zweiter Abschnitt der zweiten Seitenfläche

16 Schneidkante

17 18 zweiter Bereich des Werkstücks, der bei einem zweiten Materialabtrag des zweiten Ausführungsbeispiels entfernt wird

19 erster Abschnitt der zweiten Seitenfläche

20 dritter Abschnitt der ersten Seitenfläche

21 zweiter Abschnitt der zweiten Seitenfläche

22 dritte Seitenfläche

23 Schneidkante

24 zweiter Bereich des Werkstücks, der bei einem zweiten Materialabtrag des dritten Ausführungsbeispiels entfernt wird

25 erster Abschnitt der zweiten Seitenfläche

26 dritter Abschnitt der ersten Seitenfläche

27 zweiter Abschnitt der zweiten Seitenfläche

28 dritte Seitenfläche

29 Schneidkante

30 Laser

31 Strahlachse

32 Strahlkegel

**Patentansprüche**

1. Verfahren zur Werkstückbearbeitung, bei dem ein Laserstrahl und/ oder ein Werkstück relativ zueinander bewegt werden und an dem Werkstück eine Schneidkante mittels Materialabtrag durch Laserablation erzeugt wird, **gekennzeichnet durch** folgende Verfahrensschritte erstes Ausrichten des Werkstücks (1) und/ oder des Laserstrahls (2) relativ zueinander, wobei der Laserstrahl (2) auf eine erste Seitenfläche (3) des Werkstücks (1) gerichtet wird, erstes Abtragen von Material von dem Werkstück (1) mit dem Laserstrahl (2) wobei ein erster Bereich (4) von dem Werkstück (1) entfernt und eine neue zweite Seitenfläche (5) des Werkstücks erzeugt wird, zweites Ausrichten des Werkstücks (1) und/ oder des Laserstrahls (2) relativ zueinander in einer von dem ersten Ausrichten unterschiedlichen Stellung von Werkstück (1) und Laserstrahl (2) relativ zueinander, wobei der Laserstrahl auf die zweite Seitenfläche (5) oder die erste Seitenfläche (3) gerichtet wird, zweites Abtragen von Material von dem Werkstück (1) mit dem Laserstrahl (2', 2", 2''') wobei ein zweiter Bereich (12, 18, 24) des Werkstücks (1) entfernt wird, der kleiner ist als der erste Bereich (4), und eine neue dritte Seitenfläche (13, 22, 28) erzeugt wird, und wobei die Kante, die am Ende des zweiten Materialabtrags an der dritten Seitenfläche (13, 22, 28) erzeugt wird, die Schneidkante (16, 23, 29) ist, wobei der Laser beim ersten und zweiten Abtragen von Material mit seiner Strahlachse unter einem Winkel δ < β gegen diejenige Seitenfläche gerichtet ist, an der der Materialabtrag beginnt, wobei β der Winkel zwischen der Seitenfläche, an der der Materialabtrag beginnt, und der **durch** den Materialabtrag erzeugten Seitenfläche ist.

2. Verfahren nach Anspruch 1, **dadurch gekennzeichnet, dass** für den Winkel δ gilt δ ≤ β - θ/ 2, wobei θ der Öffnungswinkel des Laserstrahls ist.

3. Verfahren nach Anspruch 1, **dadurch gekennzeichnet, dass** der Winkel δ im wesentlichen der Differenz aus dem Winkel β und dem halben Öffnungswinkel des Laserstrahls entspricht.

4. Verfahren nach einem der vorhergehenden Ansprüche, **dadurch gekennzeichnet, dass** das erste Abtragen von Material von dem Werkstück (1) mit dem Laserstrahl (2) in einem ersten Abschnitt (7) der ersten Seitenfläche (3) beginnt, und dass beim ersten Abtragen des ersten Bereichs (4) der erste Abschnitt (7) der ersten Seitenfläche (3) entfernt wird.

5. Verfahren nach einem der vorhergehenden Ansprüche, **dadurch gekennzeichnet, dass** die neue zweite Seitenfläche (5) zu einem nach dem Materialabtrag verbleibenden zweiten Abschnitt (8) der ersten Seitenfläche (3) benachbart ist.

6. Verfahren nach einem der vorhergehenden Ansprüche, **dadurch gekennzeichnet, dass** das zweite Abtragen von Material von dem Werkstück (1) mit dem Laserstrahl (2', 2", 2"') in einem ersten Abschnitt der zweiten Seitenfläche (5) beginnt und bis zu einem zweiten Abschnitt (8) der ersten Seitenfläche (3) fortgesetzt wird oder umgekehrt.

7. Verfahren nach Anspruch 6, **dadurch gekennzeichnet, dass** bei dem zweiten Abtragen von Material ein Teil des zweiten Abschnitts (8) der ersten Seitenfläche (3) und ein erster Abschnitt (17, 19, 25) von der zweiten Seitenfläche (5) entfernt wird.

8. Verfahren nach einem der vorhergehenden Ansprüche, **dadurch gekennzeichnet, dass** die dritte Seitenfläche (13, 22, 28) zu einem dritten nach dem zweiten Abtragen von Material an der ersten Seitenfläche (3) verbleibenden Abschnitt (14, 20, 26) benachbart ist, und dass die dritte Seitenfläche (13, 22, 28) zu einem nach dem zweiten Materialabtrag verbleibenden zweiten Abschnitt (15, 21, 27) der zweiten Seitenfläche (5) benachbart ist.

9. Verfahren nach einem der vorhergehenden Ansprüche, **dadurch gekennzeichnet, dass** die Schneidkante entweder als Kante zwischen der dritten Seitenfläche (13, 22) und der ersten Seitenfläche (3) oder als Kante zwischen der dritten Seitenfläche (28) und der zweiten Seitenfläche (5) erzeugt wird.

10. Verfahren nach einem der vorhergehenden Ansprüche, **dadurch gekennzeichnet, dass** der Winkel zwischen der zweiten Seitenfläche (5) und dem zweiten Abschnitt (8) der ersten Seitenfläche (3) größer als 45° und kleiner als 120° ist.

11. Verfahren nach einem der vorhergehenden Ansprüche, **dadurch gekennzeichnet, dass** der Winkel $\alpha$, $\alpha_1$ oder $\alpha_2$ zwischen der dritten Seitenfläche (13, 22, 28) und dem dritten Abschnitt (14, 20, 26) der ersten Seitenfläche (3) und/oder der Winkel $\gamma$ zwischen der dritten Seitenfläche (13) und dem zweiten Abschnitt (27) der zweiten Seitenfläche (5) größer als 0° und kleiner als 180° ist.

12. Verfahren nach einem der vorhergehenden Ansprüche, **dadurch gekennzeichnet, dass** das Material schichtweise durch Laserablation abgetragen wird.

13. Verfahren nach einem der vorhergehenden Ansprüche, **dadurch gekennzeichnet, dass** der Laserstrahl (2, 2', 2", 2"') mittels einer Strahlführung über das Werkstück (1) bewegt wird.

14. Verfahren nach einem der vorhergehenden Ansprüche, **dadurch gekennzeichnet, dass** das Material zur Ausbildung der zweiten Seitenfläche (5) von der ersten Seitenfläche (3) bis zu einer vierten Seitenfläche (6) des Werkstücks (1) abgetragen wird, wobei die vierte Seitenfläche (6) und die erste Seitenfläche (3) frei von gemeinsamen Kanten sind.

15. Verfahren nach einem der vorhergehenden Ansprüche, **dadurch gekennzeichnet, dass** die zweite und die dritte Seitenfläche (5, 13, 22, 28) beim Materialabtrag als ebene Flächen ausgebildet werden.

16. Verfahren nach einem der vorhergehenden Ansprüche, **dadurch gekennzeichnet, dass** das Werkstück (1) nach dem ersten Abtragen von Material und vor dem zweiten Abtragen von Material relativ zum Laserstrahl (2) um einen Winkel zwischen 60° und 180° um eine zur Strahlachse des Laserstrahls (2) beim ersten Materialabtrag im wesentlichen senkrechten Achse gedreht wird.

17. Verfahren nach einem der vorhergehenden Ansprüche, **dadurch gekennzeichnet, dass** beim zweiten Materialabtrag weniger Material mit dem Laserstrahl abgetragen wird als beim ersten Materialabtrag.

Fig. 1

Fig. 2

**Fig. 3**

**Fig. 4**

**Fig. 5**

**Fig. 6**

Fig. 7

**Fig. 8**

**Fig. 8a**

Fig. 9

Fig. 10

Europäisches
Patentamt

European
Patent Office

Office européen
des brevets

**Nummer der Anmeldung**

EP 13 00 3368

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 0 720 887 A1 (DRUKKER INT BV [NL]) 10. Juli 1996 (1996-07-10) * Spalte 3, Zeile 16 - Zeile 35; Abbildung 3 * ----- | 1-17 | INV. B23K26/36 B23K26/38 B23P15/28 |
| A | ZA 9 307 997 A (DE BEERS IND DIAMOND) 13. Juni 1994 (1994-06-13) * das ganze Dokument * ----- | 1-17 | |
| A | EP 0 191 203 A2 (LEMELSON JEROME H) 20. August 1986 (1986-08-20) * das ganze Dokument * ----- | 1-17 | |
| Y | EP 2 374 569 A2 (EWAG AG [CH]) 12. Oktober 2011 (2011-10-12) * Zusammenfassung * ----- | 12 | |
| Y | DE 198 60 585 A1 (LASERPLUSS AG [DE]) 20. Juli 2000 (2000-07-20) * Spalte 3 - Spalte 5; Abbildungen 3,4 * ----- | 1-17 | |
| | | | RECHERCHIERTE SACHGEBIETE (IPC) B23K B23P |

Der vorliegende Recherchenbericht wurde für alle Patentansprüche erstellt

| Recherchenort | Abschlußdatum der Recherche | Prüfer |
|---|---|---|
| München | 16. Januar 2014 | De Backer, Tom |

**ANHANG ZUM EUROPÄISCHEN RECHERCHENBERICHT**
**ÜBER DIE EUROPÄISCHE PATENTANMELDUNG NR.**                    EP 13 00 3368

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-01-2014

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0720887 | A1 | 10-07-1996 | DE | 69511059 | D1 | 02-09-1999 |
| | | | DE | 69511059 | T2 | 10-02-2000 |
| | | | EP | 0720887 | A1 | 10-07-1996 |
| | | | IL | 115472 | A | 17-08-1999 |
| | | | JP | 3343316 | B2 | 11-11-2002 |
| | | | JP | H08197270 | A | 06-08-1996 |
| | | | ZA | 9508166 | A | 24-04-1996 |
| ZA 9307997 | A | 13-06-1994 | KEINE | | | |
| EP 0191203 | A2 | 20-08-1986 | KEINE | | | |
| EP 2374569 | A2 | 12-10-2011 | CN | 102189335 | A | 21-09-2011 |
| | | | DE | 102010011508 | A1 | 15-09-2011 |
| | | | EP | 2374569 | A2 | 12-10-2011 |
| | | | JP | 2011200935 | A | 13-10-2011 |
| | | | US | 2011220625 | A1 | 15-09-2011 |
| DE 19860585 | A1 | 20-07-2000 | DE | 19860585 | A1 | 20-07-2000 |
| | | | DE | 29908585 | U1 | 02-09-1999 |

EPO FORM P0461

Für nähere Einzelheiten zu diesem Anhang : siehe Amtsblatt des Europäischen Patentamts, Nr.12/82